# EUROPÄISCHE PATENTSCHRIFT

(11) **EP 1 390 124 B1**
(45) Veröffentlichungstag und Bekanntmachung des Hinweises auf die Patenterteilung: **06.07.2005**
(21) Anmeldenummer: 02724253.6
(22) Anmeldetag: 21.03.2002
(51) Int. Cl.: B01D 53/94, F01N 3/20

(54) **VERFAHREN ZUR SELEKTIVEN KATALYTISCHEN REDUKTION VON STICKOXIDEN MIT AMMONIAK IM MAGEREN ABGAS EINES VERBRENNUNGSPROZESSES**
METHOD FOR THE SELECTIVE CATALYTIC REDUCTION OF NITROGEN OXIDES USING AMMONIA IN THE POOR EXHAUST GAS FROM A COMBUSTION PROCESS
PROCEDE DE REDUCTION CATALYTIQUE SELECTIVE D'OXYDES D'AZOTE AVEC DE L'AMMONIAC DANS LES GAZ D'ECHAPPEMENTS PAUVRES ISSUS D'UN PROCESSUS DE COMBUSTION

(30) Priorität: 19.05.2001 DE 10124549
(43) Veröffentlichungstag der Anmeldung: 25.02.2004
(73) Patentinhaber: Degussa AG, 40474 Düsseldorf (DE)
(72) Erfinder: LANG, Jürgen, 73230 Kirchheim-Teck (DE); SCHÜTTE, Rüdiger, 63755 Alzenau (DE); RUDEK, Markus, Dr., 60598 Frankfurt (DE)
(86) Internationale Anmeldenummer: PCT/EP2002/003163
(87) Internationale Veröffentlichungsnummer: WO 2002/094419

(56) Entgegenhaltungen:
- EP-A- 0 962 632
- EP-A- 1 023 935
- EP-A- 1 149 622
- WO-A-98/51402
- WO-A-99/49957
- WO-A-99/49958
- DE-A- 10 041 891
- US-B1- 6 176 078

## Beschreibung

Die Erfindung betrifft ein Verfahren zur selektiven katalytischen Reduktion von Stickoxiden mit Ammoniak im mageren Abgas eines Verbrennungsprozesses.

Stickoxide, die bei Verbrennungsprozessen entstehen, zählen zu den Hauptverursachem des sauren Regens und den damit verbundenen Umweltschäden. Quellen für die Stickoxidabgabe in die Umwelt sind hauptsächlich die Abgase von Kraftfahrzeugen sowie die Rauchgase von Verbrennungsanlagen, insbesondere von Kraftwerken mit Öl-, Gas- oder Steinkohlefeuerungen oder von stationären Verbrennungsmotoren sowie von industriellen Betrieben.

Ein Kennzeichen der Abgase aus diesen Prozessen ist ihr hoher Sauerstoffgehalt, der die Reduktion der in ihnen enthaltenen Stickoxide erschwert. Zur Charakterisierung des Sauerstoffgehaltes wird häufig die Luftzahl Lambda (λ) herangezogen. Hierbei handelt es sich um das auf stöchiometrische Verhältnisse normierte Luft/Brennstoff-Verhältnis des Luft/Brennstoff-Gemisches, mit dem der Verbrennungsprozeß betrieben wird. Bei stöchiometrischer Verbrennung ist die Luftzahl gleich eins. Bei überstöchiometrischer Verbrennung wird die Luftzahl größer 1 - das resultierende Abgas ist mager. Im umgekehrten Fall spricht man von einem fetten Abgas.

Ein seit langem genutztes Verfahren zur Entfernung der Stickoxide aus solchen Abgasen ist die sogenannte selektive katalytischen Reduktion (SCR: Selective Catalytic Reduction) mit Ammoniak an einem speziell ausgelegten Reduktionskatalysator. Geeignete Katalysatoren hierfür werden zum Beispiel in den Patentschriften EP 0 367 025 B1 und EP 0 385 164 B1 beschrieben. Sie bestehen aus einer Mischung von Titanoxid mit Oxiden des Wolframs, Siliciums, Vanadiums und anderen. Ebenso sind Katalysatoren auf der Basis von mit Kupfer und Eisen ausgetauschten Zeolithen bekannt. Diese Katalysatoren entfalten ihre optimale Aktivität bei Temperaturen zwischen 300 und 500 °C und einem Molverhältnis zwischen dem Reduktionsmittel Ammoniak und den Stickoxiden von 0,6 bis 1,6. Die in den Abgasen enthaltenen Stickoxide bestehen je nach Führung des Verbrennungsprozesses vor dem Katalysator zu 60 bis 90 Vol.-% aus Stickstoffinonoxid.

Zur Durchführung dieses Verfahrens in Kraftfahrzeugen muß das für die selektive katalytische Reduktion benötigte Ammoniak an Bord des Fahrzeugs mitgeführt werden. Alternativ zum umweltschädlichen Ammoniak kann auch eine zu Ammoniak umsetzbare Verbindung wie zum Beispiel Harnstoff verwendet werden. Der Vorteil dieses Verfahrens liegt darin begründet, daß der Betrieb des Motors unabhängig von der Abgasreinigung optimiert werden kann. Allerdings erfordert der großflächige Einsatz dieses Verfahrens den Aufbau einer teuren Harnstoff-Infrastruktur.

Um den Aufbau einer Harnstoff-Versorgung zu vermeiden schlägt die EP 0 773 354 A1 vor, den für die selektive katalytischen Reduktion benötigten Ammoniak an Bord des Kraftfahrzeugs aus dem mitgeführten Kraftstoff zu erzeugen. Zu diesem Zweck wird der Verbrennungsmotor alternierend mit einem magerem und einem fettem Luft/Kraftstoff-Gemisch betrieben. Das dabei gebildete Abgas wird über einen Dreiweg-Katalysator und einen Katalysator für die selektive katalytische Reduktion geleitet. Während des Betriebes mit dem fetten Luft/Kraftstoff-Gemisch werden die im Abgas enthaltenen Stickoxide am Dreiweg-Katalysator unter den reduzierenden Bedingungen des fetten Abgases bis zum Ammoniak reduziert. Das sich bildende Ammoniak wird vom SCR-Katalysator gespeichert. Während des Betriebes mit magerem Abgas passieren die im Abgas enthaltenen Stickoxide den Dreiweg-Katalysator und werden am SCR-Katalysator unter Verbrauch des zuvor abgespeicherten Ammoniaks zu Stickstoff und Wasser reduziert.

In der DE 198 20 828 A1 wird ein Verfahren beschrieben, bei dem der Verbrennungsmotor ebenfalls alternierend mit magerem und fettem Luft/Kraftstoff-Gemisch betrieben wird. Das Abgasreinigungssystem enthält hierbei drei Katalysatoren, wobei vor dem Dreiweg-Katalysator des oben beschriebenen Verfahrens ein Stickoxid-Speicherkatalysator im Abgastrakt des Motors angeordnet ist. Während des Betriebs des Motors mit einem mageren Luft/Kraftstoff-Gemisch wird ein erheblicher Anteil der im Abgas enthaltenen Stickoxide vom Speicherkatalysator gespeichert, während der restliche Anteil der Stickoxide am SCR-Katalysator unter Verbrauch des zuvor abgespeicherten Ammoniaks umgesetzt wird. Während des Betriebs des Motors mit einem fetten Luft/Kraftstoff-Gemisch werden die auf dem Speicherkatalysator gespeicherten Stickoxide freigesetzt und am nachfolgenden Dreiweg-Katalysator zu Ammoniak umgesetzt, welches dann auf dem SCR-Katalysator gespeichert wird.

In der EP 0 861 972 A1 wird eine Variante dieser Verfahrens beschrieben, wobei das benötigte Ammoniak ebenfalls mit Hilfe eines Dreiweg-Katalysators aus den in einem fetten Abgas enthaltenen Stickoxiden an Bord des Kraftfahrzeugs synthetisiert wird. Zur Erzeugung des fetten Abgasstromes werden einige Zylinder des Verbrennungsmotors mit einem fetten Luft/Kraftstoff-Gemisch betrieben und deren Abgas von dem mageren Abgas der restlichen Zylinder getrennt zur Synthetisierung von Ammoniak über den Dreiweg-Katalysator geleitet.

Ein wesentlicher Nachteil der letzten drei Verfahren liegt im notwendigen Eingriff in das Motormanagement und in der hohen Anspringtemperatur der Katalysatoren begründet. Durch die Notwendigkeit, die Abgaszusammensetzung zur Bildung von Ammoniak zyklisch zwischen fett und mager zu wechseln, können Optimierungspotentiale bezüglich des Motorwirkungsgrades nicht erschlossen werden. Außerdem ist es bei diesen Verfahren nur sehr schwer möglich, die produzierte Menge an Ammoniak der tatsächlich benötigten Menge anzupassen. Dies gilt insbesondere für stark wechselnde Lastbedingungen des Motors.

In der DE 199 03 533 A1 wird ein weiteres Verfahren zur selektiven katalytischen Reduktion von Stickoxiden in sauerstoffhaltigen Abgasen beschrieben. Hierbei wird zusätzlich zum mageren Abgas des Motors ein fetter Gasstrom unabhängig vom Motorbetrieb erzeugt, welcher zur Bildung des für die Reduktion benötigten Ammoniaks in einem elektrischen Gasentladungsplasma behandelt wird. Dieser fette Abgasstrom kann zum Beispiel durch einen separaten Brenner erzeugt werden, der mit einem unterstöchiometrischen Luft/Kraftstoff-Gemisch betrieben wird und ein Stickoxid enthaltendes Abgas liefert. Die hier vorgeschlagene plasmakatalytische Ammoniaksynthese ist energetisch und apparatetechnisch effektiver als die Lösung gemäß der letztgenannten drei Verfahren.

Das Verfahren der DE 199 03 533 A1 entkoppelt zwar die Synthese von Ammoniak vom Abgas des Verbrennungsmotors, aber auch bei diesem Verfahren bereitet es große Probleme, die Produktion des Ammoniaks der benötigten Menge bspw. bei wechselnden Lastbedingungen schnell anzupassen.

Aufgabe der vorliegenden Erfindung ist es, ein alternatives Verfahren für die Entfernung der Stickoxide aus Abgasen von Verbrennungsprozessen anzugeben, welches das für die selektive katalytische Reduktion benötigte Ammoniak unabhängig vom Verbrennungsprozeß erzeugt und es ermöglicht, die Dosierung des Ammoniaks den möglicherweise schnell wechselnden Bedingungen des Verbrennungsprozesses anzupassen.

Diese Aufgabe wird gelöst durch ein Verfahren zur selektiven katalytischen Reduktion von Stickoxiden mit Ammoniak im mageren Abgas eines mit einem ersten, mageren Luft/Brennstoff-Gemisch betriebenen Verbrennungsprozesses/Wärmekraftmaschine, wobei das für die selektive Reduktion benötigte Ammoniak aus einem zweiten, fetten Luft/Brennstoff-Gemisch, welches Stickstoffmonoxid enthält, durch Reduktion des Stickstoffinonoxids in einer NH₃-Synthesestufe zu Ammoniak unter Bildung eines Produktgasstromes gewonnen wird. Das Verfahren ist dadurch gekennzeichnet, daß das gebildete Ammoniak vom Produktgasstrom abgetrennt und in einem Speichermedium für die bedarfsgerechte Verwendung bei der selektiven katalytischen Reduktion gespeichert wird.

Wenn im folgenden von Ammoniak die Rede ist, so schließt dies auch Verbindungen ein, die beispielsweise durch thermische Einwirkung oder durch Hydrolyse leicht zu Ammoniak umgesetzt werden können. Hierzu zählen zum Beispiel Harnstoff, Ammoniumcarbonat, Ammoniumcarbamat und andere Derivate des Ammoniaks.

Bei der vorliegenden Erfindung wird die Bildung des Ammoniaks von den Bedingungen des Verbrennungsprozesses abgekoppelt, indem der Verbrennungsprozeß mit einem ersten Luft/Brennstoff-Gemisch betrieben und das Ammoniak aus einem zweiten Luft/Brennstoff-Gemisch erzeugt wird, welches unabhängig vom ersten Luft/Brennstoff-Gemisch zur Verfügung gestellt wird. Im Gegensatz zu der Vorgehensweise in der DE 199 03 533 A1, auf die bezüglich des Standes der Technik verwiesen wird, wird das gebildete Ammoniak jedoch nicht momentan/unmittelbar für die selektive katalytische Reduktion zur Verfügung gestellt, sondern in einem Speichermedium zwischengespeichert. Dies ermöglicht es, das Ammoniak in einem stationären, wirkungsgradoptimierten Prozeß zu erzeugen und das Ammoniak aus der Gasphase in die Flüssigphase zu überführen (Reduzierung des zu handhabenden Stoffstroms um Faktor 1000). Die Bildung von Ammoniak wird dabei so betrieben, daß stets für alle wesentlichen, sogar für alle vorkommenden Betriebszustände des Verbrennungsprozeß ausreichend gespeichertes Ammoniak zur Verfügung steht. Sollte wegen momentan geringen Ammoniakbedarfs die Speicherkapazität voll ausgelastet sein, so kann die Bildung des Ammoniaks vorübergehend unterbrochen werden.

Erfindungsgemäß wird also für den Prozeß der selektiven katalytischen Reduktion das zuvor gespeicherten Ammoniak verwendet. Dies ermöglicht es, den benötigten Ammoniak auch bei schnell wechselndem Bedarf mit hoher Genauigkeit in den Abgasstrom vor dem SCR-Katalysator aufzugeben.

Zur Bildung von Ammoniak in der NH₃-Synthesestufe muß das zweite Luft/Brennstoff-Gemisch Stickstoffmonoxid enthalten. Das benötigte Stickstoffmonoxid kann in einer effizienten NO-Synthesestufe mittels eines thermischen Plasmas zum Beispiel in einer elektrischen Bogenentladung oder in einer Funkenentladung aus Luft gewonnen werden. Das resultierende Gasgemisch wird dann durch Zufuhr von Brennstoff angefettet und der molekulare Sauerstoff umgesetzt. Alternativ kann gemäß der DE 199 03 533 A1 eine unterstöchiometrische Verbrennung vorgenommen werden, das heißt das zweite Luft/Brennstoff-Gemisch wird in einer NO-Synthesestufe zur Bildung von Stickstoffmonoxid einer thermischen Verbrennung unterworfen, die für die Bildung von Stickstoffmonoxid optimiert ist.

Bevorzugt wird zur Bildung des im zweiten Luft/Brennstoff-Gemisch enthaltenen Stickstoffmonoxids ein fettes Luft/Brennstoff-Gemisch in einer NO-Synthesestufe mittels einer elektrischen Gasentladung behandelt, wobei die NO-Bildung und die Sauerstoffumsetzung quasi gleichzeitig stattfindet.

Das die NO-Synthesestufe verlassende Gasgemisch enthält neben dem gebildeten Stickstoffmonoxid und restlichem Brennstoff noch Wasserdampf, Stickstoff, Kohlenmonoxid, Kohlendioxid, teiloxidierte Kohlenwasserstoffe und gegebenenfalls weiterer Reaktionsprodukte. Dieses Gasgemisch wird nun zur Bildung von Ammoniak in der NH₃-Synthesestufe zu Ammoniak umgesetzt. Die Bildung von Ammoniak erfolgt erfindungsgemäß an einem üblichen Dreiweg-Katalysator durch Reduktion des im zweiten, fetten Luft/Brennstoff-Gemisch enthaltenen Stickstoffmonoxids. Dieser Katalysator kann elektrisch beheizt werden, um die Zeit bis zum Erreichen der Betriebstemperatur abzukürzen.

Dreiweg-Katalysatoren werden üblicherweise für die Abgasreinigung von stöchiometrisch betriebenen Benzinmotoren verwendet. Sie sind in der Lage, die drei im Abgas von Verbrennungsmotoren enthaltenen Schadstoffe Kohlenmonoxid (CO), Kohlenwasserstoffe (HC) und Stickoxide (NOx) gleichzeitig zu unschädlichen Verbindungen (Wasser, Kohlendioxid und Stickstoff) umzusetzen, wenn das Abgas im wesentlichen stöchiometrisch zusammengesetzt ist, das heißt wenn seine Luftzahl sich in einem engen Intervall um den stöchiometrischen Wert von 1,0 herum bewegt (1,0 ± 0,002).

Der Begriff Dreiweg-Katalysator wird im Rahmen dieser Erfindung synonym für Katalysatoren verwendet, die in der Lage sind, im fetten Abgas enthaltenes Stickstoffmonoxid zu Ammoniak zu reduzieren. Typische Dreiweg-Katalysatoren enthalten als katalytisch aktive Komponenten Platin, Rhodium und Palladium in verschiedenen Kombinationen. Diese Edelmetalle sind gewöhnlich in hoher Dispersion auf aktivem Aluminiumoxid als Trägermaterial aufgebracht. Weiterhin enthalten Dreiweg-Katalysatoren sogenannte Sauerstoff speichernde Materialien, in der Regel Ceroxid, die durch Wechsel der Oxidationszahl Sauerstoff aufnehmen als auch abgeben können. Sie sind daher in idealer Weise dazu geeignet, geringe Fluktuationen der Luftzahl um den stöchiometrischen Wert herum auszugleichen.

Es ist seit langem bekannt (vergleiche hierzu die eingangs zitierten Patentschriften zum Stand der Technik), daß Dreiweg-Katalysatoren unter fetten Abgasbedingungen (Luftzahl kleiner 0,9) die im Abgas enthaltenen Stickoxide bis zum Ammoniak reduzieren. Diese Fähigkeit der Dreiweg-Katalysatoren wird im erfindungsgemäßen Verfahren zur Bildung von Ammoniak ausgenutzt.

Der die NH₃-Synthesestufe verlassende Produktgasstrom wird nicht, wie aus dem Stand der Technik bekannt, direkt zur selektiven katalytischen Reduktion des momentanen Stickoxidgehaltes im Abgas des Verbrennungsmotors verwendet. Das im Produktgasstrom enthaltene Ammoniak wird erfindungsgemäß zunächst vom Produktgasstrom abgetrennt und in einem Speichermedium gespeichert. Die Abtrennung des Ammoniaks vom Produktgasstrom erfolgt bevorzugt in einem Ammoniak-Wäscher, wobei die Waschflüssigkeit gleichzeitig als Speichermedium für Ammoniak dient. Als Waschflüssigkeit und Speichermedium wird vorteilhafterweise Wasser eingesetzt, da es eine hohe Löslichkeit für Ammoniak aufweist.

Der vom Ammoniak befreite Produktgasstrom kann dem Abgasstrom des Verbrennungsprozesses zugemischt oder teilweise wieder dem Eingang der NO- oder NH₃-Synthesestufe zugeführt werden. Letztere Variante ist besonders vorteilhaft, da im Produktgasstrom neben Ammoniak auch noch restliches, nicht umgesetztes Stickstoffmonoxid enthalten sein kann, welches nur eine geringe Löslichkeit in Wasser hat und daher den Ammoniak-Wäscher ungehindert verläßt. Durch Rückführen dieses ungenutzten Stickstoffmonoxids in die NH₃-Synthesestufe erhöht sich der Wirkungsgrad der Ammoniakbildung.

In einer speziellen Ausführungsform des Verfahrens wird das Speichermedium hinter der NH₃-Synthesestufe zusammen mit der NH₃-Synthesestufe in einem einzigen Reaktor angeordnet.

Bei der Bildung von Stickstoffmonoxid in der NO-Synthesestufe aus einem Luft/Brennstoff-Gemisch, sei es durch eine unterstöchiometrische Verbrennung oder durch eine Gasentladung, bilden sich neben Stickstoffmonoxid noch Kohlenmonoxid, Kohlendioxid und gegebenenfalls weiterer Reaktionsprodukte. Die Anwesenheit von Kohlendioxid ist dabei erwünscht, da es durch Bildung von Ammoniumcarbonat oder Ammoniumhydrogencarbonat, welches ebenfalls leicht in Wasser löslich ist, die Effizienz des Waschprozesses verbessert.

Das vorgeschlagene Verfahren eignet sich prinzipiell für die Entfernung von Stickoxiden aus mageren Abgasen von unterschiedlichen Verbrennungsprozessen durch selektive katalytische Reduktion. Besonders geeignet ist es jedoch für die Abgasreinigung von Verbrennungsmotoren in Kraftfahrzeugen, die mit einem mageren Luft/Kraftstoff-Gemisch betrieben werden, also von Dieselmotoren und sogenannten Magermotoren. Das Verfahren erlaubt dabei die Bildung von Ammoniak an Bord des Kraftfahrzeuges. Der Aufbau einer Infrastruktur für die Betankung von Fahrzeugen mit einer Ammoniaklösung oder einer Harnstofflösung ist für das vorgeschlagene Verfahren nicht notwendig. Lediglich das Speichermedium, also Wasser, muß von Zeit zu Zeit nachgefüllt werden, da es zusammen mit dem gelösten Ammoniak und gegebenenfalls weiteren gelösten Ammoniumverbindungen direkt in das Abgas des Verbrennungsmotors vor dem Kontakt mit dem SCR-Katalysator eingedüst wird.

Wie schon ausgeführt, wird die selektive katalytische Reduktion durch bedarfsgerechte Dosierung des Speichermediums mit dem im Speichermedium gelösten Reduktionsmittel versorgt. Durch die Betriebsweise der NO- und NH₃-Synthesestufen kann sichergestellt werden, daß die Menge des Speichermediums und die Konzentration des darin gelösten Ammoniaks für die Versorgung des SCR-Prozesses auch bei schnellen Lastwechseln des Verbrennungsmotors stets ausreichend ist.

Im Unterschied zu den bekannten Verfahren aus dem Stand der Technik, welche ebenfalls mit einer Bildung des Ammoniaks an Bord des Fahrzeugs arbeiten, wird nach dem vorgeschlagenen Verfahren das Ammoniak unabhängig vom momentanen Bedarf der Abgasreinigung produziert und im Speichermedium vorgehalten. Dies ermöglicht es, den Prozeß für die Bildung von Ammoniak zu optimieren und so seinen Wirkungsgrad zu steigern.

Besonders vorteilhaft können für die Ammoniaksynthese Mikroreaktorsysteme eingesetzt werden, die sich zum einen durch einen geringen Raumbedarf und zum anderen durch eine hohe Raum-Zeit-Ausbeute auszeichnen. Alle drei Stufen des vorgeschlagenen Prozesses, das heißt die NO-Synthesestufe, die NH₃-Synthesestufe und der Ammoniak-Wäscher, können in Mikroreaktoren durchgeführt werden. Besonders vorteilhaft erweist sich dieses Prinzip für die NO-Synthesestufe. Zur Optimierung des Wirkungsgrades der NO-Bildung ist es erforderlich, das gebildete Stickstoffmonoxid möglichst schnell aus dem Reaktionsgemisch zu entfernen. Dies geschieht durch Quenschen, das heißt durch Abschrecken des Reaktionsgemisches, an den im Vergleich zum Volumen sehr großen Oberflächen des Mikroreaktors.

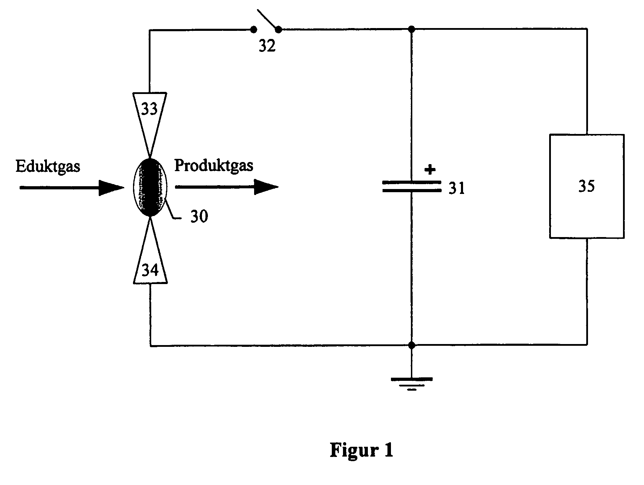

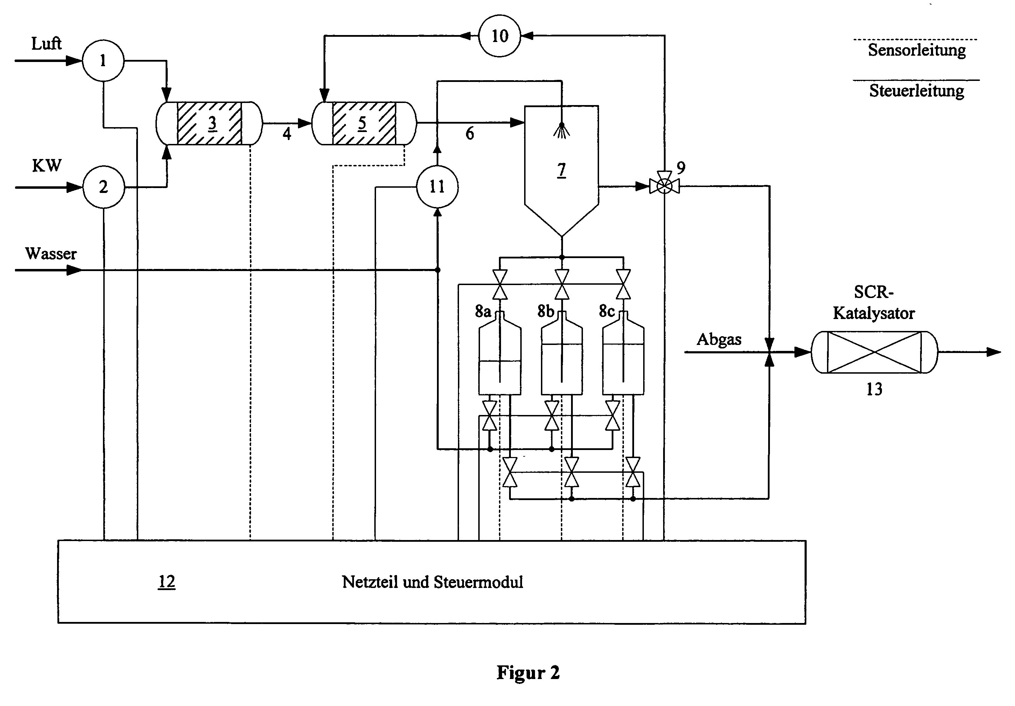

Das Verfahren wird nun an Hand der Figuren 1 und 2 näher erläutert. Es zeigen:
- **Figur 1:**: Mögliche Ausführungsform eines Funken-Plasmareaktors
- **Figur 2:**: Verfahrensschema

Zur Bildung von Stickstoffmonoxid in der NO-Synthesestufe werden bevorzugt Gasentladungsplasmen eingesetzt. Es können unterschiedliche Gasentladungstypen verwendet werden. Geeignet sind Hochfrequenzentladungen, auch mit Frequenzen oberhalb 250 MHz (Mikrowellenentladungen), Corona-Entladungen, Funkenentladungen, Bogenentladungen, unterbrochene Bogenentladungen und dielektrisch behinderte Entladungen, auch Barrieren-Entladungen genannt. Ebenso geeignet sind Mischformen dieser elektrischen Gasentladungen, die gegebenenfalls kapazitiv oder induktiv angekoppelt werden können. Bevorzugt werden Bogenentladungen oder Funkenentladungen, besonders bevorzugt werden Funkenentladungen oder Bogenentladungen in kleinen Strukturen mit einer Schlagweite zwischen 10 Mikrometer und 10 Millimeter verwendet.

Figur 1 zeigt den prinzipiellen Aufbau eines Funkenplasmareaktors für die Synthese von NO (NO-Synthesestufe). Zur Erzeugung von Funkenentladungen (30) zwischen den beiden Spitzen (33) und (34) wird mit Hilfe eines Schalters (32) die am Kondensator (31) anstehende Spannung an die Spitzen angelegt. Durch den Kondensator ist die für eine Entladung zur Verfügung stehende Energie beschränkt. Der Kondensator wird nach Entladung wieder durch die Spannungsversorgung (35) aufgeladen. Das Schließen des Schalters (32) führt zu einem elektrischen Überschlag zwischen den zwei Spitzen (33) und (34) (Durchschlag der Gasstrecke), das heißt zur Ausbildung impulsförmiger Entladungen, sogenannter Funkenentladungen (30). Die zeitliche und räumliche Entwicklung der Funkenentladung hängt von zahlreichen Parametern ab: Druck, Gasart, Elektrodengeometrie, Elektrodenmaterial, Elektrodenabstand, äußere Beschaltungsdaten des elektrischen Kreises usw.; und stellt einen sehr komplizierten dynamischen Prozeß dar.

Im elektrischen Funken (30) werden Gastemperaturen von mehr als 10000 K erreicht, was die Bildung von NO bei einer Entladung in Luft sehr effizient ermöglicht. Es wurde gefunden, daß circa 10 bis 20 eV je NO-Molekül an elektrischer Energie hierzu aufgewendet werden müssen. Wie schon erläutert, ist es zur Optimierung des Wirkungsgrades der NO-Bildung erforderlich, das gebildete Stickstoffmonoxid möglichst schnell zum Beispiel durch Kontakt mit kalten Flächen abzukühlen. Daher sind auch für die Durchführung dieses Prozesses Mikroreaktoren mit ihren im Vergleich zum Volumen sehr großen Oberflächen hervorragend geeignet.

Funkenentladungen können bei Drücken zwischen 0,1 mbar und 10 bar betrieben werden. Die elektrische Anregung der Entladung erfolgt durch Anlegen einer Wechselspannung an die Elektroden. Je nach Druck im Entladungsraum, Abstand der Elektroden, Frequenz und Amplitude der Wechselspannung bilden sich beim Überschreiten einer Zündspannung Entladungen aus. Das heiße Plasma hat relativ zu seinem Volumen eine große kalte Oberfläche, was u. a. neben den Reaktorwänden den Quenschprozeß bewerkstelligt (Schreckraten von bis zu 10⁸ K/s [0,1 Gigakelvin je Sekunde]). Die Entladungsdauer hängt von der Anregung und elektrischen Beschaltung des Entladungskreises ab und liegt zwischen 1 Mikrosekunde und einigen Sekunden, bevorzugt im Bereich von einigen Millisekunden.

Wenn von Wechselspannung die Rede ist, so schließt dies auch gepulste Gleichspannungen oder Spannungen beliebigen zeitlichen Verlaufs ein.

Wie erläutert, kommt es durch Anlegen einer ausreichenden Wechselspannung an die beiden Elektroden zu der gewünschten Entladung. Die benötigte Spannung hängt von dem freien Abstand d (Schlagweite) zwischen den Elektroden sowie vom Druck in der Entladungsstrecke, von der Gaszusammensetzung und von eventuell vorhandenen Einbauten zwischen den Spitzen im Entladungsraum ab. Der Abstand d wird bevorzugt zwischen 0,01 und 10 mm eingestellt. Die benötigten Spannungen können 10 Vp bis 100 kVp; bevorzugt 100 Vp bis 15 kVp besonders bevorzugt 500Vp bis 1,5kVp in einem Mikrosystem betragen. Die Frequenz der Wechselspannung liegt zwischen 10 Hz und 30 GHz, bevorzugt zwischen 50 Hz und 250 MHz.

Der Plasmareaktor von Figur 1 kann zur Durchführung des Verfahrens mit einem geeigneten Katalysator in Form von Pellets oder Granulat gefüllt sein. Die elektrische Entladung findet hier vor allen Dingen in Form von Gleitfunkenentladungen an der Oberfläche der Pellets statt. Es können dadurch noch höhere Schreckraten erreicht werden. Weiterhin wird dadurch wird die Konzentration an Ionen und Radikalen in räumlicher Nachbarschaft der Oberfläche des Katalysators erhöht.

Wenn im folgenden von Pellets die Rede ist, so schließt dies auch Partikel, Pulver oder Puder oder sonstige Komgrößenzustände ein. Die Durchmesser können zwischen 100 Nanometer und 10 mm, bevorzugt zwischen 10 Mikrometer und 1 Millimeter variieren.

Die Katalysatorpellets bestehen bevorzugt aus mindestens einem feinteiligen Trägermaterial ausgewählt aus der Gruppe Aluminiumoxid, Titanoxid, Zirkonoxid, Ceroxid, Siliciumdioxid, Magnesiumoxid oder deren Mischoxide, und/oder Zeolithen. Die Materialien können außerdem durch Abscheiden der Edelmetalle der Platingruppe, insbesondere Platin, Palladium, Rhodium und Iridium, in hochdisperser Form auf ihrer Oberfläche oder mit Materialtypen wie z.B. Barium-Yttrium-Kupferoxide, Eisenoxide sowie durch sonstige Dotierung (z.B. Ionenimplantation) umfassender katalytisch aktiviert werden. Zu diesem Zweck sollte die spezifische Oberfläche der Trägermaterialien wenigstens 10 m²/g (gemessen nach DIN 66132) betragen. Wegen der geringen Temperaturbelastung der Elektroden in einer Funkenentladung können auch Materialien mit geringerer Temperaturbeständigkeit wie beispielsweise solche aus Kunststoffen oder Fasern sowie sogenannte Mikrotubes eingesetzt werden.

Die Elektroden des Plasmareaktors können als parallel zueinander ausgerichtete flächige Gebilde aufgebaut sein oder eine koaxiale Anordnung mit einer Mittenelektrode, die von einer Rohrelektrode umgeben ist, bilden. Zur Erleichterung der Ausbildung von nur kurz andauernden Entladungen sind räumliche Inhomogenitäten jeglicher Form (geschuppt, gekörnt wie nach einem Ätzangriff, löchrig, gebirgsähnlich, sägezahnähnlich mit scharfen Graten usw.); bevorzugt flächig verteilte Spitzen, besonders bevorzugt flächig verteilte Sägezähne vorgesehen, die zu lokalen Feldüberhöhungen und damit zur Ausbildung der Entladung und u.a. auch zum Wandern von Spitze zu Spitze führen.

Die Entladung kann über verschiedenartige Wechselspannungen angeregt werden. Für eine Änderung der Entladungskenngrößen Temperatur, Ionisierungsgrad usw. im Entladungsraum des Reaktors sind pulsförmige Anregungsspannungen besonders geeignet. Die Impulsdauer bei Pulsbetrieb richten sich u.a. nach dem Gassystem, dem Elektrodenmaterial, der Elektrodenform sowie der Schlagweite und liegen bevorzugt zwischen 10 ns und 1 ms. Die Spannungsamplituden können 10Vp bis 100 kVp; bevorzugt 100 Vp bis 15 kVp besonders bevorzugt 500Vp bis 1,5kVp in einem Mikrosystem betragen. Diese gepulsten Gleichspannungen können auch von hohen Wiederholraten (von 10 MHz im Fall der 10 ns-Impulse (Tastverhältnis 10:1) bis zu niedrigen Frequenzen hin (10 bis 0,01 Hz) gefahren und moduliert werden beispielsweise als "Burstfunktionen", um die Reaktion von adsorbierten Spezies zu ermöglichen.

Der Reaktor der NO-Synthesestufe kann aus jedem elektrisch und thermisch geeigneten Material hergestellt werden. Insbesondere sind Kunststoffe, Keramiken und Gläser - isolierend oder leitend - zu nennen. Ebenso sind hybride Konstruktionen aus verschiedenen Materialien möglich, so zum Beispiel mit dotiertem Diamant vergütete Oberflächen oder mit ferroelektischem/dielektrischem Material eingeschlämmte Vertiefungen. Diese Materialien der Elektrotechnik (vgl. DIN 40685) haben induktive oder kapazitive Eigenschaften und beeinflussen damit die zeitlichen und/oder elektrische Entladungsverhalten und damit die Eigenschaften oder den Charakter des erzeugten Plasmas - bspw. die Temperatur eines Funkens. Neben dieser haben auch andere elektrischen Größen wie die Spannungsamplitude sowie deren zeitlicher Verlauf Einfluß auf die Entladungseigenschaften und wirken sich bspw. auf die Standzeit der Elektroden oder auf die Effizienz der NO-Bildung aus (Entladungstemperatur).

Wie schon erläutert, bewirkt das Einschlämmen von geeigneten Vertiefungen mit dielektrischem oder ferroelektrischem Material den Aufbau eines elektrischen Schaltelements, nämlich das eines Kondensators oder das einer Ferrit-Induktivität, die einerseits die bevorzugte Funkenentladung oder die temporäre Bogenentladung während der Entladung selbst von der versorgenden Strom-/Spannungsquelle entkoppelt, und diese in ihrer zeitlichen Dauer begrenzt. Thermisch heiße Entladungen kurzer Dauer sind deshalb besonders bei der NO-Synthese besonders bevorzugt, weil sie neben den kleinen Strukturen und damit kleinen Entladungsvolumina förderlich für den schon erläuterten Quenschprozeß sind.

Figur 2 zeigt ein Verfahrensschema für das vorgeschlagene Verfahren. Das Abgas eines hier nicht gezeigten Verbrennungsprozesses oder einer Wärmekraftmaschine wird zur Entfernung von im Abgas enthaltenen Stickoxiden über den SCR-Katalysator (13) geleitet. Der Verbrennungsprozeß oder die Wärmekraftmaschine wird mit einem ersten, mageren Luft/Brennstoffgemisch betrieben. Das für die SCR-Reaktion benötigte Ammoniak wird mit dem in Figur 2 gezeigten Verfahrensschema erzeugt. Hierzu wird ein zweites, fettes Luft/Brennstoff-Gemisch (4) benötigt, welches Stickstoffmonoxid enthält. Dieses zweite Luft/Brcnnstoff-Gemisch wird zum Beispiel dadurch erhalten, daß mittels der Pumpen (1) und (2) Luft und Kohlenwasserstoffe (KW) in einen NO-Synthesereaktor gefördert und dort unter Bildung von NO zum Beispiel fett verbrannt werden. In einer bevorzugten Ausführungsform wird zur Bildung von NO im NO-Synthesereaktor ein thermischer Plasmabrenner oder in einer anderen vorteilhaften Ausführungsform einen Funkenentladungsbrenner oder eine kalte Verbrennung in einem kalten Plasma eingesetzt. Bei der Pumpe (2) kann es sich um eine üblich KraftstoffEinspritzpumpe handeln. Funkenentladungsbrenner schließt auch Technologien ein, durch die thermisch heiße Plasmen z.B. "Lichtbögen", kurz aber periodisch wiederholt erzeugt werden können.

Das so gebildete zweite, fette Luft/Brennstoff-Gemisch (4), welches im wesentlichen aus NO, H₂O, N₂, CO, CO₂, H₂O und CₓH_{y} sowie teiloxidierten Kohlenwasserstoffen besteht, wird im NH₃-Synthesereaktor (Katalysereaktor) (5) unter der Bildung von Ammoniak behandelt. Bevorzugt wird der Katalysator elektrisch beheizt.

Das im Produktgasstrom (6) am Ausgang von (5) enthaltene Ammoniak wird im Ammoniak-Wäscher (7) von den übrigen Bestandteilen abgetrennt. Als Waschflüssigkeit dient bevorzugt Wasser, welches gleichzeitig die Rolle eines Speichermediums für Ammoniak übernimmt. Die sich bildende Ammoniak-Lösung wird nicht sofort für die SCR-Reaktion verwendet, sondern zunächst zwischengespeichert. Zu diesem Zweck werden bevorzugt mehrere Speicherbehälter (8a, 8b, 8c) eingesetzt. Zur Erhöhung der Ammoniak-Konzentration in der Waschflüssigkeit ist eine Pumpe (11) vorgesehen, die die Waschflüssigkeit im Kreis führt, bis die gewünschte NH₃-Konzentration erreicht ist. Jeweils einer der Behälter, zum Beispiel (8a), ist in diesen Waschkreislauf eingeschaltet, während aus einem anderen, zum Beispiel (8c), die Ammoniak-Lösung entnommen und in den Abgasstrom zur Durchführung der selektiven katalytischen Reduktion eingedüst wird. Die Dosierung der Ammoniak-Lösung wird dabei der momentanen Konzentration der Stickoxide im Abgas angepasst, um eine optimale Schadstoffumsetzung bei möglichst geringem Ammoniak-Schlupf zu gewährleisten.

Durch die Verwendung zur Abgasreinigung wird die Waschflüssigkeit verbraucht. Die verbrauchte Menge wird durch Zufuhr von frischer Waschflüssigkeit zum Waschkreislauf ersetzt.

Die Zuschaltung der Speicherbehälter zu den verschiedenen Medienströmen erfolgt über entsprechende Ventilanordnungen. In Figur 2 ist beispielhaft eine geeignete Ventilanordnung dargestellt.

Als Speichermedium für Ammoniak wird bevorzugt Wasser verwendet. Ammoniak hat eine hohe Löslichkeit in Wasser, die besonders vorteilhaft durch die simultane Absorption des ebenfalls im Produktgasstrom vorhandenen Kohlendioxids verbessert wird. Durch Reaktion beider Komponenten miteinander bilden sich Ammoniumcarbonat, Amoniumhydrogencarbonat und Carbamate. Da der Gasstrom vor Eintritt in den Ammoniak-Wäscher zwischen 60 und 800 °C, bevorzugt zwischen 60 und 350 °C, besonders bevorzugt zwischen 60 und 150 °C heiß ist, kann es beispielweise zu einer unerwünschten Erhöhung des Wasserdampfanteils kommen. Für diesen Fall wird dem Ammoniak-Wäscher ein Kondensator nachgeschaltet oder ein Kühler in den Absorber integriert.

Das gesamte Verfahren wird mit Hilfe von Sensoren überwacht, deren Signale in einem Steuermodul (12) zur Regelung der verschiedenen Verfahrensstufen ausgewertet werden. Die Energieversorgung der Anordnung erfolgt durch entsprechende Spannungs- bzw. Stromquellen. Als Sensoren kommen alle gebräuchlichen Technologien wie z.B. Temperaturmessung mit Thermoelementen, Leitfähigkeitsmessung, Kapazitätsmessung, NH₃-Sensor, NO-Sensor, Arraysensoren, Oberflächenwellensensoren, optische Sensoren usw. in Verbindung mit dynamische oder quasidynamischen Meß- und Auswerteverfahren in Frage.

Es ist möglich, daß es zu hohen NO-Konzentrationen im Produktgasstrom (6) und somit zu Verlusten dieses wertvollen Rohstoffes für die Ammoniakproduktion kommt. Bei Auftreten hoher NO-Konzentrationen im Produktgasstrom wird daher der Gasstrom nach Verlassen des Ammoniak-Wäschers (7) mit Hilfe von Pumpe (10) wieder auf den Eingang des NO- oder NH₃-Synthesereaktors zurückgeführt. Ansonsten wird der Gasstrom über das von (12) gesteuerte Ventil (9) in den motorischen Abgasstrom eindosiert. In einer anderen nicht gezeigten Variante wird nach dem Wäscher bspw. das Synthesegas mit Luft gemischt und das darin enthaltene NO in einem reversiblen Speicher absorbiert - z.B. BaO, der restliche Gasstrom dann über das von (12) gesteuerte Ventil (9) in den motorischen Abgasstrom eindosiert und zusammen mit diesem von Schadstoffen gereinigt. In kurzen Zeitintervallen wird dem Synthesegas keine Luft zugegeben; dann erfolgt die Desorption von NO aus dem Speicher, das zusammen mit dem nun fett bleibenden Synthesegas auf den Eingang des NO- oder NH₃-Synthesereaktors zurückgeführt wird. Für die Desorption des NO kommen alle gebräuchlichen Methoden der Chemie, z.B. auch thermische Desorption durch beheizte Träger, usw. in Frage. In einer weiteren nicht gezeigten Variante kann bei besonders hohem Reduktionsmittelbedarf das NH₃ enthaltende Synthesegas (6) direkt dem Abgasstrom zugemischt werden.

Treten starke Ablagerungen z.B. von Kohlenstoff auf, die negativ auf die plasmaelektrischen und/oder katalytischen Eigenschaften des Apparates wirken können, dann können diese leicht entfernt werden (Regeration), in dem für diese Aufgabe während des Betriebs ausschließlich Luft durch die Anordnung durchgesetzt wird.

Das Steuermodul (12) kann sofern erforderlich die Steuerung und Regelung des SCR-Prozesses im Abgas beinhalten oder alternativ dazu mit einem externen Steuergerät für den SCR-Prozeß verbunden sein..

## Patentansprüche

1. Verfahren zur selektiven katalytischen Reduktion von Stickoxiden mit Ammoniak im mageren Abgas eines mit einem ersten, mageren Luft/Brennstoff-Gemisch betriebenen Verbrennungsprozesses, wobei das für die selektive Reduktion benötigte Ammoniak aus einem zweiten, fetten Luft/Brennstoff-Gemisch, welches Stickstoffmonoxid enthält, durch Reduktion des Stickstoffmonoxids in einer NH₃-Synthesestufe zu Ammoniak unter Bildung eines Produktgasstromes gewonnen wird,
**dadurch gekennzeichnet,**
**daß** das Stickstoffmonoxid enthaltende zweite Luft/Brennstoffgemisch in der NH₃-Synthesestufe zur Reduktion des Stickstoffinonoxids zu Ammoniak über einen Dreiweg-Katalysator geführt und das so gebildete Ammoniak vom Produktgasstrom abgetrennt und in einem Speichermedium für die bedarfsgerechte Verwendung bei der selektiven katalytischen Reduktion gespeichert wird.

2. Verfahren nach Anspruch 1,
**dadurch gekennzeichnet,**
**daß** das im zweiten Luft/Brennstoff-Gemisch enthaltene Stickstoffmonoxid in einer NO-Synthesestufe mittels eines thermischen Plasmas oder einer elektrischen Bogenentladung aus Luft gewonnen und der resultierende Gasgemisch durch Zufuhr von Brennstoff angefettet wird.

3. Verfahren nach Anspruch 1,
**dadurch gekennzeichnet,**
**daß** zur Bildung des im zweiten Luft/Brennstoff-Gemisch enthaltenen Stickstoffmonoxids ein fettes Luft/Brennstoff-Gemisch in einer NO-Synthesestufe mittels einer elektrischen Gasentladung behandelt wird.

4. Verfahren nach Anspruch 1,
**dadurch gekennzeichnet,**
**daß** das zweite Luft/Brennstoff-Gemisch in der NO-Synthesestufe zur Bildung von Stickstoffmonoxid einer thermischen Verbrennung unterworfen wird, die für die Bildung von Stickstoffmonoxid optimiert ist.

5. Verfahren nach Anspruch 1,
**dadurch gekennzeichnet,**
**daß** das in der NH₃-Synthesestufe gebildete Ammoniak vom Produktgasstrom mittels eines Ammoniak-Wäschers abgetrennt und von der Waschflüssigkeit absorbiert wird, die als Speichermedium für Ammoniak dient.

6. Verfahren nach Anspruch 5,
**dadurch gekennzeichnet,**
**daß** der Produktgasstrom nach Abtrennen des Ammoniaks dem Abgasstrom des Verbrennungsprozesses zugemischt wird.

7. Verfahren nach Anspruch 6,
**dadurch gekennzeichnet,**
**daß** ein Teil des Produktgasstromes nach Abtrennen des Ammoniaks dem Eingang der NO- oder NH₃-Synthesestufe zugeführt wird.

8. Verfahren nach Anspruch 5,
**dadurch gekennzeichnet,**
**daß** Dreiweg-Katalysator und Speichermedium in der NH₃-Synthesestufe hintereinander in einem Reaktor angeordnet sind.

9. Verfahren nach Anspruch 1,
**dadurch gekennzeichnet,**
**daß** als Speichermedium für Ammoniak Wasser eingesetzt wird.

10. Verfahren nach Anspruch 9,
**dadurch gekennzeichnet,**
**daß** die Absorption von Ammoniak durch die gleichzeitige Absorption von Kohlendioxid verbessert wird.

11. Verfahren nach Anspruch 1,
**dadurch gekennzeichnet,**
**daß** es sich bei dem Verbrennungsprozeß um die Verbrennung eines überstöchiometrisch zusammengesetzten Luft/Kraftstoff-Gemisches im Verbrennungsmotor eines Kraftfahrzeuges handelt.

12. Verfahren nach Anspruch 12,
**dadurch gekennzeichnet,**
**daß** die NO-Synthesestufe, die NH₃-Synthesestufe sowie der Ammoniak-Wäscher in Form von Mikroreaktorsystemen aufgebaut sind.

13. Verfahren nach Anspruch 1,
**dadurch gekennzeichnet,**
**daß** der Dreiweg-Katalysator elektrisch beheizt wird.

## Claims

1. A process for the selective catalytic reduction of nitrogen oxides with ammonia in a lean-mix exhaust gas from a combustion process operated with a first, lean-mix air/fuel mixture, wherein the ammonia required for selective reduction is obtained from a second, rich-mix air/fuel mixture which contains nitrogen monoxide by reduction of the nitrogen monoxide in a NH₃ synthesis step to give ammonia with the formation of a product gas stream,
**characterised in that**,
the nitrogen monoxide-containing second air/fuel mixture is passed over a three-way converter catalyst in the NH₃ synthesis step for reduction of the nitrogen monoxide to ammonia and the ammonia formed in this way is separated from the product gas stream and is stored in a storage medium for use as and when required for selective catalytic reduction.

2. A process according to Claim 1,
**characterised in that**,
the nitrogen monoxide present in the second air/fuel mixture is obtained from air in a NO synthesis step by means of a thermal plasma or an electrical arc discharge and the resulting gas mixture is enriched by the addition of fuel.

3. A process according to Claim 1,
**characterised in that**,
to form the nitrogen monoxide present in the second air/fuel mixture, a rich-mix air/fuel mixture is treated in a NO synthesis step by means of an electrical gas discharge.

4. A process according to Claim 1,
**characterised in that**,
the second air/fuel mixture in the NO synthesis step for the formation of nitrogen monoxide is subjected to thermal combustion which is optimised for the formation of nitrogen monoxide.

5. A process according to Claim 1,
**characterised in that**,
the ammonia formed in the NH₃ synthesis step is separated from the product gas stream by means of an ammonia washer and is absorbed by the wash liquid which acts as the storage medium for ammonia.

6. A process according to Claim 5,
**characterised in that**,
the product gas stream, after separation of the ammonia, is mixed with the exhaust gas stream from the combustion process.

7. A process according to Claim 6,
**characterised in that**,
some of the product gas stream, after separation of the ammonia, is supplied to the entrance of the NO or NH₃ synthesis step.

8. A process according to Claim 5,
**characterised in that**,
the three-way converter catalyst and the storage medium are arranged one after the other in a reactor in the NH₃ synthesis step.

9. A process according to Claim 1 ,
**characterised in that**,
water is used as the storage medium for ammonia.

10. A process according to Claim 9,
**characterised in that**,
the absorption of ammonia is improved by the simultaneous absorption of carbon dioxide.

11. A process according to Claim 1,
**characterised in that**,
the combustion process is the combustion of a superstoichiometrically composed air/fuel mixture in the internal combustion engine in a motor vehicle.

12. A process according to Claim 12 (sic),
**characterised in that**,
the NO synthesis step, the NH₃ synthesis step and the ammonia washer are constructed in the form of microreactor systems.

13. A process according to Claim 1,
**characterised in that**,
the three-way converter catalyst is electrically heated.

## Revendications

1. Procédé de réduction catalytique sélective d'oxydes d'azote avec de l'ammoniac dans les gaz d'échappements pauvres issus d'un processus de combustion actionné par un premier mélange air/carburant pauvre, l'ammoniac requis pour la réduction sélective étant obtenu à partir d'un deuxième mélange air/carburant riche comprenant du monoxyde d'azote grâce à la réduction du monoxyde d'azote en ammoniac dans un étage de synthèse de NH₃ par formation d'un flux gazeux de produit,
**caractérisé en ce que**
le deuxième mélange air/carburant comprenant le monoxyde d'azote est guidé à l'étage de synthèse de NH₃ via un catalyseur à trois voies pour réduire le monoxyde d'azote en ammoniac, et l'ammoniac ainsi formé est séparé du flux gazeux de produit et stocké dans un milieu accumulateur pour l'utilisation suivant les besoins en cas de réduction catalytique sélective.

2. Procédé selon la revendication 1,
**caractérisé en ce que**
le monoxyde d'azote compris dans le deuxième mélange air/carburant est obtenu à partir de l'air dans un étage de synthèse de NO à l'aide d'un plasma thermique ou d'une décharge électrique à arc, et le mélange gazeux en résultant est ensuite enrichi par l'apport du combustible.

3. Procédé selon la revendication 1,
**caractérisé en ce que**
pour la formation du monoxyde d'azote contenu dans le deuxième mélange air/carburant, on traite un mélange air/carburant riche dans une étape de synthèse de NO à l'aide d'une décharge électrique de gaz.

4. Procédé selon la revendication 1,
**caractérisé en ce que**
le deuxième mélange air/carburant subit une combustion thermique optimisée pour la formation de monoxyde d'azote dans l'étage de synthèse de NO pour la formation de monoxyde d'azote.

5. Procédé selon la revendication 1,
**caractérisé en ce que**
l'ammoniac formé dans l'étage de synthèse de NH₃ est séparé du flux gazeux de produit au moyen d'un laveur à ammoniac et est absorbé par le liquide de lavage servant simultanément de milieu accumulateur pour l'ammoniac.

6. Procédé selon la revendication 5,
**caractérisé en ce que**
le flux gazeux de produit est additionné au flux des gaz d'échappement du processus de combustion après la séparation de l'ammoniac.

7. Procédé selon la revendication 6,
**caractérisé en ce qu'**
une partie du flux gazeux de produit est amenée à l'entrée de l'étage de synthèse de NO ou de NH₃ après la séparation de l'ammoniac.

8. Procédé selon la revendication 5,
**caractérisé en ce que**
le catalyseur à trois voies et le milieu accumulateur sont disposés l'un derrière l'autre dans un réacteur dans l'étage de synthèse de NH₃.

9. Procédé selon la revendication 1,
**caractérisé en ce que**
de l'eau sert de milieu accumulateur pour l'ammoniac.

10. Procédé selon la revendication 9,
**caractérisé en ce que**
l'absorption d'ammoniac est améliorée par l'absorption simultanée de dioxyde de carbone.

11. Procédé selon la revendication 1,
**caractérisé en ce que**
dans le cas du procédé de combustion, il s'agit de la combustion d'un mélange air/carburant composé de manière sur-stoechiométrique dans le moteur à combustion d'un véhicule automobile.

12. Procédé selon la revendication 12,
**caractérisé en ce que**
l'étage de synthèse de NO, l'étage de synthèse de NH₃ ainsi que le laveur à ammoniac sont construits sous la forme de systèmes de microréacteurs.

13. Procédé selon la revendication 1,
**caractérisé en ce que**
le catalyseur à trois voies est chauffé électriquement.
